# DEMANDE DE BREVET EUROPEEN

(11) **EP 2 460 489 A1**
(43) Date de publication de la demande: **06.06.2012**
(21) Numéro de dépôt: 10015255.2
(22) Date de dépôt: 03.12.2010
(51) Int. Cl.: A61C 5/02

(54) **Instrument pour l'alésage des canaux radiculaires dentaires**

(71) Demandeur: Maillefer Instruments Holding S.À.R.L., 1338 Ballaigues (CH)
(72) Inventeur: ROTA, Gilbert, 25160 Vaux et Chantegrue (FR); VALLOTTON, Paul-Henri, 1142 Pampigny (CH)
(74) Mandataire: Micheli & Cie SA

(57) **Abrégé**

Instrument pour l'alésage des canaux radiculaires dentaires comprenant une tige effilée (1) présentant au moins une cannelure hélicoïdale (4) définissant au moins une arête de coupe hélicoïdale (4a) et, sur une portion (1c) de la partie active (1b) de la tige (1) s'étendant jusqu'à la pointe (3) de la tige (1), une creusure hélicoïdale (5). Au moins une des arêtes définies par ladite au moins une creusure hélicoïdale (5) est confondue avec l'arête de coupe (4a) définie par ladite cannelure hélicoïdale (4), ladite creusure (5) diminuant l'angle de coupe (α) de ladite arête de coupe (4a). Toute section (6,7,7') de la partie active (1b) de la tige (1) présente au moins un côté convexe (6a,7a,7'a) appartenant à la cannelure hélicoïdale (4). Plus la section (6,7,7') considérée est proche de la pointe (3) de la tige (1) plus la courbure en tout point dudit côté convexe (6a,7a,7'a) tend à se rapprocher de la courbure du cercle circonscrit (C6,C7,C7') à ladite section (6,7,7') et passant par l'arête de coupe (4a) définie par ladite cannelure hélicoïdale (4).

## Description

La présente invention a pour objet un instrument pour l'alésage des canaux radiculaires dentaires.

Le traitement d'une racine dentaire infectée se réalise par l'extraction de la pulpe à l'aide d'instruments spécifiques, puis par la mise en forme du canal radiculaire au moyen d'alésages successifs, traditionnellement réalisés à l'aide d'instruments de taille et de conicité variables. La dernière opération consiste à obturer le canal radiculaire.

La mise en forme du canal radiculaire consiste dans un premier temps à réaliser un élargissement du canal dans ses parties coronaire et médiane pour permettre dans un second temps de traiter la partie apicale du canal plus facilement par un nettoyage mécanique des tissus infectés.

Un instrument destiné à l'alésage des canaux radiculaires dentaires présente généralement une tige effilée emmanchée dans un manche pour permettre son entraînement manuel ou mécanique et comprenant sur au moins une partie de sa longueur des cannelures hélicoïdales à pas constant ou non et présentant au moins une arête de coupe.

Utilisé en rotation continue, ce genre d'instrument peut avoir tendance à se visser dans le canal. Le document EP 0 801 930 décrit un alésoir dentaire permettant d'éviter ce problème de vissage et caractérisé par le fait que la tangente au point de coupe de l'instrument tend à se superposer à la tangente au diamètre du cercle dans lequel est inscrite une section de coupe et passant par ledit point de coupe.

Outre le vissage, un autre problème intervenant dans la réalisation d'instruments pour l'alésage des canaux radiculaires est celui de la résistance et de la flexibilité des instruments. En effet, lorsque l'instrument est trop flexible, il risque de se plier ou de se casser avant que le praticien ait pu terminer l'opération et lorsque l'instrument est trop rigide, il ne suit que difficilement la courbure du canal radiculaire dentaire.

De même, on juge l'efficacité d'une arête de coupe à son angle de coupe. Considérant une section d'un instrument inscrite dans un cercle circonscrit passant par ses arêtes de coupe, l'angle de coupe d'une arête de coupe de l'instrument est défini comme l'angle entre un diamètre du cercle circonscrit à la section passant par l'arête de coupe et la tangente au côté de la section ayant pour sommet ladite arête de coupe (ledit côté est déterminé selon le sens de rotation des cannelures hélicoïdales de l'instrument). Plus l'angle de coupe d'une arête de coupe est aigu (voire négatif) plus ladite arête est efficace. Cependant, en général, plus l'angle de coupe est aigu plus l'angle au sommet d'une arête de coupe est aigu, c'est-à-dire plus l'arête de coupe est fine et fragile ce qui implique que l'instrument qui va en s'amincissant vers sa pointe va aussi en se fragilisant. Or c'est à la pointe de l'instrument que les forces et la torsion sont les plus importantes. Il faut donc également prendre en compte l'efficacité d'un instrument et trouver un compromis entre efficacité, flexibilité et résistance.

Le but de la présente invention est de réaliser un instrument permettant une bonne efficacité sans affaiblir ledit instrument dans une trop grande mesure.

La présente invention a pour objet un instrument pour l'alésage des canaux radiculaires dentaires comprenant une tige effilée présentant sur au moins une partie de sa longueur, constituant sa partie active, au moins une cannelure hélicoïdale définissant au moins une arête de coupe hélicoïdale, et sur une portion de ladite partie active de la tige s'étendant jusqu'à la pointe de la tige, une creusure hélicoïdale, caractérisé par le fait qu'au moins une des arêtes définies par ladite au moins une creusure hélicoïdale est confondue avec l'arête de coupe définie par ladite au moins une cannelure hélicoïdale, ladite creusure diminuant l'angle de coupe de ladite arête de coupe ; par le fait que toute section de la partie active de la tige présente au moins un côté convexe appartenant à la cannelure hélicoïdale ; et par le fait que plus la section considérée est proche de la pointe de la tige plus la courbure en tout point dudit côté convexe tend à se rapprocher de la courbure du cercle circonscrit à ladite section et passant par l'arête de coupe définie par ladite cannelure hélicoïdale.

Dans la suite, on qualifie une figure géométrique plane de convexe, si elle vérifie la propriété selon laquelle pour tout couple de points de la figure, le segment les reliant est entièrement contenu dans ladite figure. On qualifie un côté d'une figure géométrique de convexe si celui-ci est en tout point courbé vers l'extérieur de ladite figure géométrique et de concave si celui-ci est en tout point courbé vers l'intérieur de la figure géométrique.

La courbure d'un objet géométrique est une mesure quantitative du caractère « plus ou moins courbé » (c'est-à-dire plus ou moins convexe ou plus ou moins concave selon l'orientation) de cet objet. Par exemple, dans le plan euclidien, une ligne droite est un objet à une dimension de courbure nulle, et un cercle un objet de courbure constante positive. La courbure d'un arc en un point dudit arc est définie comme la courbure de l'unique cercle tangent à l'arc en ce point.

Les dessins illustrent schématiquement et à titre d'exemple une forme d'exécution de l'instrument selon l'invention.
La figure 1 illustre un instrument pour l'alésage des canaux radiculaire dentaires selon l'invention.
La figure 2 est une vue en coupe selon la ligne II-II de l'instrument illustré à la figure 1.
La figure 3 est une vue en coupe selon la ligne III-III de l'instrument illustré à la figure 1.
La figure 4 est une vue en coupe selon la ligne IV-IV de l'instrument illustré à la figure 1.

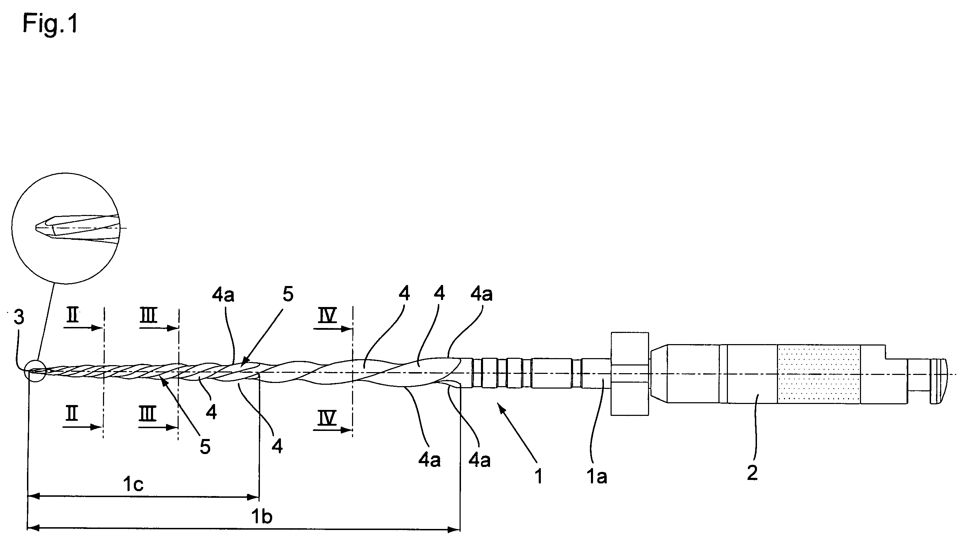

L'instrument selon l'invention et illustré sur la figure 1 comprend une tige 1 emmanchée à une de ses extrémités 1 a dans un manche 2 permettant soit l'actionnement manuel de l'instrument soit, de préférence, son engagement dans une pièce à main assurant l'entraînement mécanique dudit instrument.

Ladite tige 1 présente une partie active 1b s'étendant jusqu'à l'autre extrémité 3, dite pointe 3, de la tige 1. Ladite partie active 1b est effilée et conique, s'amincissant jusqu'à la pointe 3 de la tige 1.

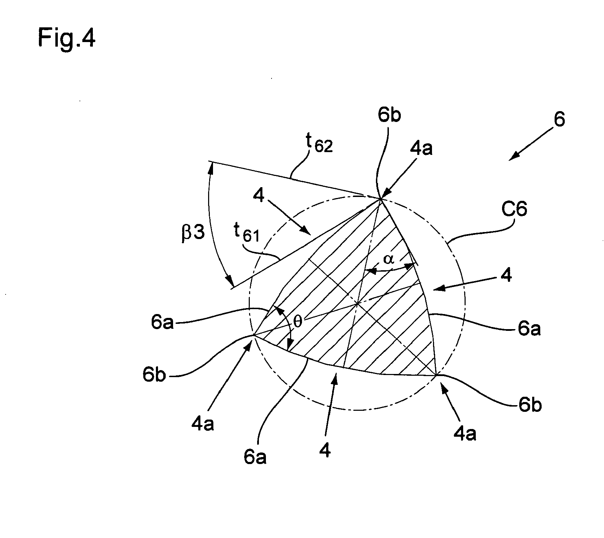

Dans la forme d'exécution illustrée, la partie active 1b de la tige 1 présente sur toute sa longueur trois cannelures hélicoïdales 4 définissant chacune une arête de coupe 4a. La partie active 1b présente par conséquent une section 6 essentiellement triangulaire dont chacun des côtés 6a définissent/appartiennent à une cannelure hélicoïdale 4 et chacun des trois sommets 6b définissent/appartiennent à une arête de coupe 4a. Selon la présente invention et comme illustré à la figure 4, la section 6 est une figure convexe et chacun de ses trois côtés 6a est convexe, c'est-à-dire courbé vers l'extérieur de ladite section.

Selon l'invention, plus une section 6 est proche de la pointe 3 de la tige 1 plus la convexité des côtés 6a de ladite section est grande, c'est-à-dire plus leur courbure en tout point tend à se rapprocher de la courbure du cercle C6 circonscrit à la section 6 et passant par les sommets 6b de ladite section.

La courbure d'un côté 6a d'une section 6 de la partie active 1b est également illustrée par exemple sur la figure 4 par l'angle β3 qui est l'angle entre la tangente t₆₁ à un côté 6a passant par un sommet 6b dudit côté et la tangente t₆₂ au cercle C6 circonscrit à la section 6 et passant par le même sommet 6b. Selon l'invention, l'angle β3 varie donc selon les sections, diminuant plus la section se rapproche de la pointe 3.

La partie active 1b de la tige 1 présente sur une partie de sa longueur une portion de coupe 1c s'étendant jusqu'à la pointe 3. Dans la forme d'exécution illustrée, la portion de coupe 1 c présente sur toute sa longueur, outre les trois cannelures hélicoïdales 4, trois creusures hélicoïdales 5. Chaque creusure 5 définit deux arêtes 5a, 5b dont une au moins est confondue avec une arête de coupe 4a. Chaque creusure 5 diminue l'angle de coupe d'une arête de coupe 4a rendant celle-ci plus efficace.

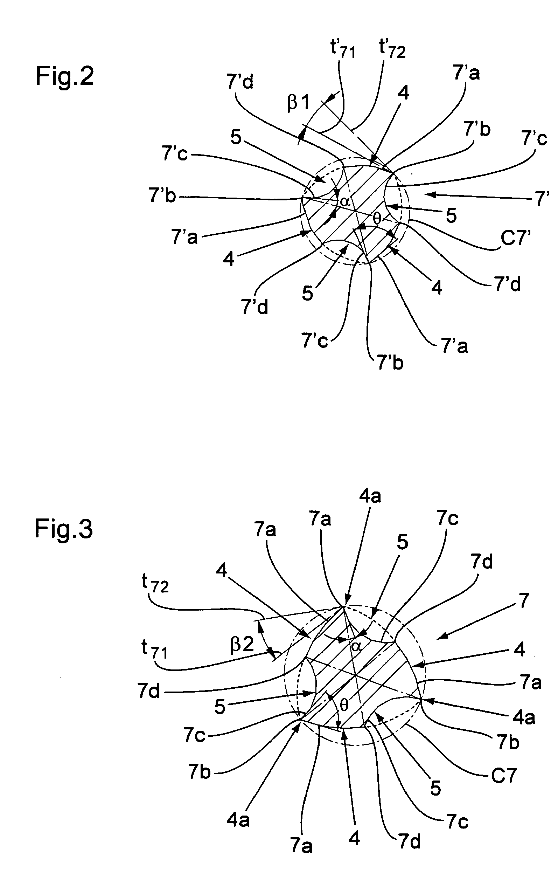

Une section 7 de la portion de coupe 1 c illustrée par exemple à la figure 3 est obtenue à partir d'une section triangulaire telle que la section 6 illustrée à la figure 4 (visible en pointillés sur les figures 2 et 3) dans les côtés 6a de laquelle des creusures 5 ont été pratiquées. Une section 7 de la portion de coupe 1c est donc un polygone non convexe présentant six côtés : trois premiers côtés 7a définissant/appartenant chacun à une cannelure hélicoïdale 4 et trois seconds côtés 7c définissant/appartenant chacun à une creusure hélicoïdale 5. La section 7 présente encore six sommets : trois premiers sommets 7b (correspondant aux sommets 6b d'une section 6 illustrée à la figure 4) définissant/appartenant chacun à une arête de coupe 4a et trois seconds sommets 7d.

Comme pour la section 6 décrite ci-dessus, les trois premiers côtés 7a sont convexes. Les trois seconds côtés 7b sont quant à eux concaves, c'est-à-dire courbés vers l'intérieur de la section 7.

Dans la forme d'exécution illustrée, chaque premier sommet 7a est le sommet d'un premier côté et d'un second côté.

De plus, selon l'invention et comme décrit en relation avec la section 6, la convexité des premiers côtés 7a augmente plus la section 7 considérée est proche de la pointe 3. Plus précisément, la courbure en tout point desdits premiers côtés 7a tend à se rapprocher de la courbure du cercle C7 circonscrit à la section 7 et passant par toutes les arêtes de coupe 4a, c'est-à-dire par tous les premiers sommets 7b.

La figure 2 illustre une section postérieure 7' de la portion de coupe 1 c de la partie active 1b de la tige 1 qui est plus proche de la pointe 3 que la section 7 illustrée à la figure 3. Les références se rapportant à la section 7 suivie d'un signe prime seront utilisées pour décrire cette section postérieure 7'.

Cette section postérieure 7' a la même forme et les mêmes particularités que la section 7 décrite précédemment. En particulier, les trois premiers côtés 7'a de la section 7' sont convexes. Selon l'invention, la convexité desdits premiers côtés 7'a de ladite section postérieure 7' est plus grande que la convexité des premiers côtés 7a de la section 7 illustrée à la figure 3 puisque cette dernière est plus éloignée de la pointe 3.

Cette différence de convexité est illustrée sur les figures par les angles β2 et β1. L'angle β2 est l'angle entre la tangente t₇₁ à un premier côté 7a passant par un premier sommet 7_{b} et la tangente t₇₂ au cercle C7 circonscrit à la section 7 passant par ledit même sommet 7a. Ledit angle β2 illustre donc la courbure du premier côté 7a. De même, la courbure d'un côté 7'a de la section postérieure 7' est illustrée à la figure 2 par l'angle β1 qui est l'angle entre la tangente t'₇₁ à un premier côté 7'a passant par un premier sommet 7'b et la tangente t'₇₂ au cercle circonscrit C'7 à la section 7' et passant par ledit premier sommet 7'b.

Ainsi, selon la présente forme d'exécution et comme illustré sur les figures 2 à 4, toute section (6, 7, 7') de la partie active 1b de la tige 1 présente trois premiers côtés (6a, 7a, 7'a) convexes dont un sommet (6b, 7b, 7'b) définit une arête de coupe 4a et la convexité de ces trois côtés convexes augmente plus ladite section considérée est proche de la pointe 3.

Selon l'invention, l'angle β3 illustrant la courbure des côtés 6a de la section 6 est donc plus grand que l'angle β2 illustrant la courbure des premiers côtés convexes 7a de la section 7, qui est lui-même plus grand que l'angle β1 illustrant la courbure des côtés convexes 7'a de la section 7', montrant ainsi que la convexité des côtés convexes d'une section de l'instrument selon l'invention augmente plus la section est proche de la pointe 3 dudit instrument.

L'ajout de creusure 5 sur la portion de coupe 1 c de la tige 1 permet d'augmenter l'efficacité des arêtes de coupe 4a définies sur toute la longueur de la partie active 1 b de la tige 1 par les cannelures hélicoïdales 4. En effet, les creusures 5 diminuent l'angle de coupe α d'une arête de coupe 4a, le rendant plus aigu (visible sur les figures 3 et 4). Dans l'art antérieur, l'ajout de telles creusures 5 aurait pour effet d'également diminuer l'angle au sommet θ d'une arête de coupe, rendant celle-ci, et par extension l'instrument, plus fragile

Or selon la présente invention et tel qu'illustré aux figures 2 et 3, le long de la portion de coupe 1c de la tige 1, une arête de coupe 4a est déterminée par un premier côté 7a, 7'a convexe et un second côté 7c, 7'c concave ayant pour sommet commun un premier sommet 7b, 7'b appartenant à ladite arête de coupe 4a. De plus, toujours selon l'invention, la convexité dudit premier côté 7a, 7'a augmente plus la section considérée est proche de la pointe 3 de la tige 1. Ainsi, on obtient une arête de coupe 4a dont l'angle de coupe α est rendu plus aigu par l'ajout d'une creusure 5 mais dont l'angle au sommet θ est sensiblement préservé par l'augmentation de la convexité du premier côté 7a convexe déterminant l'arête de coupe 4a.

Ainsi, l'augmentation de la convexité des premiers côtés 7a, 7'a convexes permet de renforcer la tige 1 en allant vers sa pointe 3 et de compenser la fragilité créée par les creusures 5. De plus, la convexité des premiers côtés 7a, 7'a va croissante en direction de la pointe 3 là où la tige est la plus fragile mais aussi là où la force et la tension en torsion sont les plus grandes lors de l'utilisation de l'instrument.

On obtient ainsi un instrument pour l'alésage de canaux dentaires efficace sans sacrifier à sa solidité.

Un tel instrument peut être obtenu à partir d'une tige de section circulaire, de préférence en un alliage de nickel titane, en y ménageant par usinage des cannelures hélicoïdales définissant des arêtes de coupe de sorte que la section de la tige soit, sur toute la longueur de sa partie active, un polygone dont la convexité des côtés définissant les cannelures hélicoïdales augmente plus la section se rapproche de la pointe 3 de la tige 1, c'est-à-dire dont la courbure en tout point des côtés tend à se rapprocher de la courbure du cercle circonscrit à la section et passant par les arêtes de coupe plus ladite section est proche de la pointe 3 de la tige. Des creusures hélicoïdales sont ensuite usinées sur une partie de la tige s'étendant vers sa pointe, pour accentuer et améliorer l'efficacité des arêtes de coupe définies par les cannelures hélicoïdales.

Les cannelures et creusures hélicoïdales d'un instrument selon l'invention peuvent avoir un pas constant ou non, et tourner dans le sens horaire ou anti-horaire.

L'instrument selon l'invention peut être utilisé en rotation continue ou en rotation alternée, par exemple 150° dans un sens et 30° dans le sens inverse pour atténuer l'effet de vissage.

La présente forme d'exécution a été décrite à titre d'exemple uniquement. En général, l'instrument selon l'invention comprend sur une partie active de sa tige au moins une cannelure hélicoïdale définissant au moins une arête de coupe et sur une portion de la partie active au moins une creusure 5 ayant une arête en commun avec au moins une arête de coupe. Toute section de la partie active de la tige présente un côté convexe définissant une cannelure hélicoïdale et dont la convexité augmente plus la section est proche de la pointe de la tige.

## Revendications

1. Instrument pour l'alésage des canaux radiculaires dentaires comprenant une tige effilée (1) présentant sur au moins une partie de sa longueur, constituant sa partie active (1 b), au moins une cannelure hélicoïdale (4) définissant au moins une arête de coupe hélicoïdale (4a), et sur une portion (1 c) de ladite partie active (1 b) de la tige (1) s'étendant jusqu'à la pointe (3) de la tige (1), une creusure hélicoïdale (5), **caractérisé par le fait qu'**au moins une des arêtes définies par ladite au moins une creusure hélicoïdale (5) est confondue avec l'arête de coupe (4a) définie par ladite au moins une cannelure hélicoïdale (4), ladite creusure (5) diminuant l'angle de coupe (α) de ladite arête de coupe (4a) ; **par le fait que** toute section (6, 7, 7') de la partie active (1 b) de la tige (1) présente au moins un côté convexe (6a, 7a, 7'a) appartenant à la cannelure hélicoïdale (4) ; et **par le fait que** plus la section (6, 7, 7') considérée est proche de la pointe (3) de la tige (1) plus la courbure en tout point dudit côté convexe (6a, 7a, 7'a) tend à se rapprocher de la courbure du cercle circonscrit (C6, C7, C7') à ladite section (6, 7, 7') et passant par l'arête de coupe (4a) définie par ladite cannelure hélicoïdale (4).

2. Instrument selon la revendication 1, **caractérisé par le fait que** la partie active (1b) de la tige (1) présente trois cannelures hélicoïdales (4) définissant trois arêtes de coupe (4a).

3. Instrument selon la revendication 2, **caractérisé par le fait que** la partie active (1 b) présente encore sur une partie de sa longueur (1 c) trois creusures (5), ayant chacune une arête confondue avec une arête de coupe (4a).
